# EUROPÄISCHE PATENTSCHRIFT

(11) **EP 2 318 742 B1**
(45) Veröffentlichungstag und Bekanntmachung des Hinweises auf die Patenterteilung: **26.12.2012**
(21) Anmeldenummer: 09777416.0
(22) Anmeldetag: 24.07.2009
(51) Int. Cl.: F16K 11/07

(54) **HYDRAULISCHE VENTILVORRICHTUNG**
HYDRAULIC VALVE DEVICE
DISPOSITIF À VANNE HYDRAULIQUE

(30) Priorität: 29.07.2008 DE 102008035212
(43) Veröffentlichungstag der Anmeldung: 11.05.2011
(73) Patentinhaber: Hydac Fluidtechnik GmbH, 66280 Sulzbach/Saar (DE)
(72) Erfinder: RÜB, Winfried, 79761 Waldshut-Tiengen (DE); BIWERSI, Sascha, Alexander, 66706 Perl (DE)
(74) Vertreter: Bartels, Martin Erich Arthur
(86) Internationale Anmeldenummer: PCT/EP2009/005378
(87) Internationale Veröffentlichungsnummer: WO 2010/012419

(56) Entgegenhaltungen:
- DE-A1- 2 255 270
- FR-A- 2 211 066
- US-A- 3 438 399

## Beschreibung

Die Erfindung betrifft eine hydraulische Ventilvorrichtung mit einer Fluidanschlussanordnung und mit einer verfahrbaren Steuereinrichtung zum zumindest teilweisen Ansteuern von einzelnen Anschlüssen der Anschlussanordnung, wobei für ein wahlweises Festhalten der Steuereinrichtung eine Rasteinrichtung vorgesehen ist, die mindestens ein in einem Führungsteil geführtes Rastteil aufweist, das von einem Steuerteil der Steuereinrichtung betätigbar in eine Raststellung eines Verriegelungsteiles bringbar ist, wobei für einen Verrastungsvorgang das Verriegelungsteil unter dem Einfluss des jeweils mittels des Steuerteils bewegten Rastteils aus einer Ausgangsstellung heraus, entgegen der Bewegungsrichtung des Steuerteils in eine Aufnahmestellung für die Aufnahme des Rastteils verfährt und mit beginnender Verrastung in seine Ausgangsstellung zurückkehrt, und wobei das Verriegelungsteil entgegen der Wirkung eines Energiespeichers aus seiner Ausgangsstellung in die Aufnahmestellung verfährt und mit der Wirkung des Energiespeichers in seine Ausgangsstellung zurückkehrt, wobei der Energiespeicher, vorzugsweise in Form einer Druckfeder ausgebildet, sich in jeder Verfahrstellung des Steuerschiebers der Steuereinrichtung mit seinem einen freien Ende an diesem Steuerschieber und mit seinem anderen freien Ende am Verriegelungsteil permanent abstützt, wobei das Steuerteil einen Steuerkonus für das jeweilige Rastteil aufweist, sowie einen Verriegelungskonus, wobei der Verriegelungskonus stärker geneigt ist als der Steuerkonus, und wobei das jeweilige Rastteil unter dem Einfluss des axial verfahrbaren Steuerteils in mindestens einen eine radiale Eindringtiefe aufweisenden Aufnahmeraum aufnehmbar ist.

Eine derartige Ventilvorrichtung ist aus US 3,438,399 A bekannt. Bei der bekannten Ventilvorrichtung sind als Rastteile Rastkugeln vorgesehen, die zur Verrastung aus einem radial außenliegenden Aufnahmeraum teilweise in einen durch eine ringförmige Nut am Steuerteil ausgebildeten Aufnahmeraum geführt werden und auf diese Weise den Steuerschieber gegen eine weitere axiale Verschiebung sichern, d.h., ortsfest halten. Hierbei stützt sich die Arbeitsfeder auf den Rastkugeln ab und die Kugeln stützen sich auf dem Steuerschieber ab, anders ausgedrückt sind diese Bauteile in ständigem Kontakt. Damit einhergehend kann eine Reibkraft der Rastkugeln auf den Steuerschieber wirken, was zu unerwünschter Schwergängigkeit und Verschleiß führen kann.

In mechanisch betätigten sogenannten Loadsensing-Ventilen werden häufig Arbeitsstellungen wie Heben, Senken oder die Schwimmstellung in einer vordefinierten Position über einen bestimmten Rastmechanismus festgehalten. Der Ventilschieber rastet in dieser Position ein und kann erst durch eine Betätigungskraft in die entgegengesetzte Richtung aus der jeweiligen Raststellung gelöst werden.

Das größte Problem der Raststellung an sich ist der konstruktive Mehraufwand im Vergleich zu Ventilen ohne eine solche Rastfunktion, welcher sich in Form von Fertigungs- und Montageaufwand sowie den daraus resultierenden Kosten niederschlägt. Weiterhin wird der Steuerschieber als Steuerteil der Steuereinrichtung permanent mit einer Querkraft belastet, und daraus resultierend Hysterese durch Reibung verursacht, was zu Hemmnissen im Betrieb führen kann.

Alle Rastmechanismen zur Rastung eines Ventilschiebers als Steuerteil haben, wie dies beispielhaft in der DE 601 11 659 T2 und der EP 1 446 599 B1 aufgezeigt ist, die Gemeinsamkeit das für diese Rastfunktion eine zusätzliche Feder benötigt wird, welche mit ihrer Kraft ein Druckstück als Rastteil (Raststift oder Rastkugel) auf eine vordefinierte Kontur drückt, in die abhängig vom Steuerschieberhub nutartige Vertiefungen eingebracht sind. Wird das Rastteil in eine solche Vertiefung unter Einfluß der Querkraft gedrückt, muss infolge der hieraus entstehenden Reibungskraft zwischen Rastteil und Kontur eine Kraft axial auf den Steuerschieber als Steuerteil aufgebracht werden, um das Rastteil wieder aus der Nut-Vertiefung zu bewegen, die Feder der Raste zu komprimieren und damit den Ventilschieber weiter verstellen zu können. Diese notwendige Kraft zur Überwindung des Rastmechanismus wird nachfolgend mit Rastkraft bezeichnet.

Die Arbeitsfedern des Ventilschiebers versuchen den Ventilschieber entgegen der Betätigungskraft und der Rastkraft wieder in die Neutralstellung zurückzuschieben. Ist die Rastkraft größer als die Federkraft der Arbeitsfedern ist das System selbsthemmend ausgebildet. Der Schieber bleibt solange in der gerasteten Stellung bis eine Betätigungskraft durch den Anwender die Differenz zwischen Rastkraft und Federkraft der Arbeitsfedern überwinden hilft. Um die bereits genannten Querkräfte zu minimieren, sind in der Regel bei den bekannten Lösungen symmetrisch am Kolbendurchmesser zwei bis drei der Rastteile inklusive Kurvenscheibe und Rastfeder angebracht. Bricht ungewollt die Feder für den Rastmechanismus, führt das aber zu einem Ausfall der Gesamtfunktion.

Aus der EP 0 023 602 A1 ist eine gattungsgemäße hydraulische Ventilvorrichtung bekannt mit einer Fluidanschlußanordnung und mit einer verfahrbaren Steuereinrichtung zum zumindest teilweisen Ansteuern von einzelnen Anschlüssen der Anschlußanordnung. Für ein wahlweises Festhalten der Steuereinrichtung ist eine Rasteinrichtung vorgesehen, die mindestens ein in einem Führungsteil geführtes Rastteil aufweist, das von einem Steuerteil der Steuereinrichtung betätigbar in eine Raststellung eines Verriegelungsteils bringbar ist.

Für einen Verrastungsvorgang. verfährt das Verriegelungsteil unter dem Einfluß des jeweils mittels des Steuerteils bewegten Rastteils aus einer Ausgangsstellung heraus entgegen der Bewegungsrichtung des Steuerteils in eine Aufnahmestellung für die Aufnahme des Rastteils. Mit beginnender Verrastung kehrt das Verriegelungsteil in seine Ausgangsstellung zurück. Die bekannte Lösung benötigt für ihre sinnfällige Funktion mehrere Energiespeicher in Form von Druckfedern. Letztere können zu Hemmnissen im Betrieb führen, was zu Beeinträchtigungen der Funktionssicherheit führt.

Ausgehend von diesem Stand der Technik liegt der Erfindung die Aufgabe zugrunde, die bekannten Lösungen dahingehend weiter zu verbessern, dass Bauraum sparend und funktionssicher sowie in kostengünstiger Weise ein Rastmechanismus für die beschriebene hydraulische Ventilvorrichtung geschaffen ist. Eine dahingehende Aufgabe löst eine hydraulische Ventilvorrichtung mit den Merkmalen des Patentanspruches 1 in seiner Gesamtheit.

Gemäß dem kennzeichnenden Teil des Patentanspruchs 1 zeichnet sich eine erfindungsgemäße hydraulische Ventilvorrichtung dadurch aus, dass die radiale Eindringtiefe des mindestens einen Aufnahmeraums derart gewählt ist, dass das jeweilige Rastteil vollständig in den jeweiligen Aufnahmeraum aufnehmbar ist und der Steuerkonus den jeweiligen Aufnahmeraum in axialer Richtung passieren kann.

Weitere vorteilhafte Ausführungsformen der erfindungsgemäßen hydraulischen Ventilvorrichtung sind Gegenstände der Unteransprüche.

Dadurch, dass der Energiespeicher, vorzugsweise in Form einer Druckfeder ausgebildet, sich in jeder Verfahrstellung des Steuerschiebers der Steuereinrichtung sich mit seinem einen freien Ende an diesem Steuerschieber und mit seinem anderen freien Ende am Verriegelungsteil permanent abstützt, und dass das Steuerteil einen Steuerkonus für das jeweilige Rastteil aufweist, sowie einen Verriegelungskonus, und dass der Verriegelungskonus stärker geneigt ist als der Steuerkonus, werden keine zusätzlichen Rastfedern benötigt, die gegebenenfalls brechen und zu einer Funktionsunfähigkeit der Ventilvorrichtung führen könnten. Insoweit ist die Funktionssicherheit für die erfindungsgemäße hydraulische Ventilvorrichtung mit nur einem Energiespeicher, vorzugsweise in Form einer Druckfeder, erhöht.

Des weiteren schließt sich an den Steuerkonus der Verriegelungskonus mit stärkerer Kegelsteigung an, die mithin derart ausgelegt ist, dass die Rastkraft jedenfalls größer wird als die Lösekraft der Druckfeder als einzigem Energiespeicher. Die Rastkraft ist insoweit als axiale Komponente der Normalkraft anzusehen, die die bevorzugt kugelförmig ausgebildeten Rastteile auf der Kegelsteigung übertragen. Weil beim Rastvorgang gegen die Druckfeder gedrückt werden muß und beim Entrasten die Druckfeder unterstützt, werden die beiden Kegelwinkel von Steuerkonus und Verriegelungskonus unterschiedlich ausgelegt. Insoweit ist das System der Rasteinrichtung selbstsichernd und ungewollte Entrastvorgänge können dergestalt mit Sicherheit vermieden werden, was zur Funktionssicherheit mit beiträgt.

Der beschriebene Aufbau von Führungs- und Verriegelungsteil erlaubt eine einfache Montage, da insgesamt wenig Einsatzteile zur Realisierung der Rastvorrichtung notwendig sind, wobei man ohne Sondervorrichtungen die Komponenten für die Rastvorrichtung in kostengünstiger Weise zusammenstecken kann. Insoweit lassen sich die Einsatzteile als einfache Drehteile, insbesondere im Umfang des hülsenartigen Führungs- und Verriegelungsteils ausbilden. Die vorzugsweise als Aufsetzteil konzipierte Rasteinrichtung läßt sich Bauraum sparend innerhalb der Ventilvorrichtung unterbringen.

Im Folgenden wird die erfindungsgemäße Ventilvorrichtung anhand eines Ausführungsbeispieles nach der Zeichnung näher erläutert. Dabei zeigen in prinzipieller und nicht maßstäblicher Darstellung die
- Fig. 1: in der Art eines Längsschnittes in Ansicht einen Teil der hydraulischen Ventilvorrichtung, mit betätigter Rasteinrichtung für die Rastung einer Schwimmstellung als 4. Stellung des Ventils;
- Fig. 2: in vergrößerter Darstellung die Rasteinrichtung in einer Ausgangs- oder Ruhestellung;
- Fig. 3 bis Fig. 5: einen Teil der Rasteinrichtung nach den Fig. 1 und 2 in verschiedenen Betätigungsstellungen und
- Fig. 6: in der Art eines Schaubildes die Kraftkennlinien beim Ein- und Entrasten mit der Rasteinrichtung.

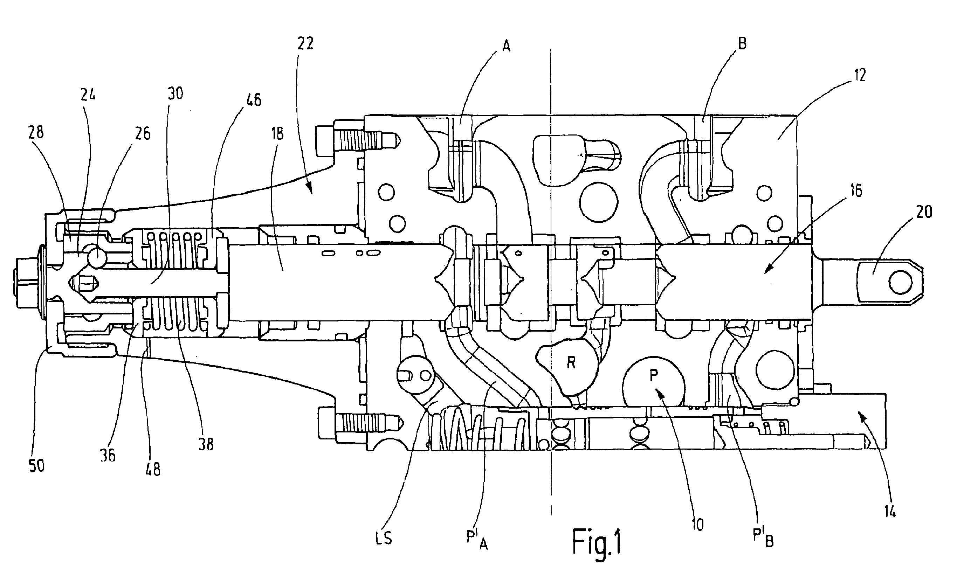

Die erfindungsgemäße hydraulische Ventilvorrichtung weist eine als Ganzes mit 10 bezeichnete Fluidanschlussanordnung auf. Die dahingehende Fluidanschlussanordnung 10 weist einen Druckversorgungsanschluss P, einen Rücklaufanschluss R, einen Sektions-Loadsensinganschluss LS, zwei Steueranschlüsse P'_{A} und P'_{B} sowie zwei Nutzanschlüsse A, B auf. Die genannten Fluidanschlüsse LS, P'_{A}, R, P, P'_{B}, A und B sind in einem Steuergehäuse 12 untergebracht, wobei in Blickrichtung auf die Fig. 1 gesehen, das untere Ende des Steuergehäuses 12 mit einer als Ganzes mit 14 bezeichneten Druckwaage versehen ist, die den Anschlüssen LS, P'_{A}, R, P und P'_{B} vorgeschaltet ist und diese insoweit ansteuert. Der dahingehende Aufbau einer hydraulischen Ventilvorrichtung ist üblich, sodass an dieser Stelle hierauf nicht mehr näher eingegangen wird und der einfacheren Darstellung wegen ist die Druckwaage 14 in der Fig. 1 nur teilweise dargestellt. Ferner sind am

Steuergehäuse zwei Nutzanschlüsse A, B vorhanden, an die eine hydraulische Arbeitsgerätschaft anschließbar ist, wie beispielsweise ein einfach oder doppelt wirkender hydraulischer Arbeitszylinder (nicht dargestellt), ein Stellmotor (nicht dargestellt) oder vergleichbare Einrichtungen, die hydraulisch betätigbar sind.

Innerhalb des Steuergehäuses 12 ist eine als Ganzes mit 16 bezeichnete Steuereinrichtung angeordnet, die einen in Blickrichtung auf die Fig. 1 gesehen horizontal verfahrbaren Steuerschieber 18 aufweist. Je nach Betätigungszustand des Steuerschiebers 18 verbindet dieser Anschlüsse der Fluidanschlussanordnung mit den Nutzanschlüssen A, B, um dergestalt Funktionen bei einer insoweit angeschlossenen hydraulischen Arbeitsgerätschaft (nicht dargestellt) auszulösen, wie beispielsweise Heben oder Senken sowie eine Schwimmstellung und ggf. eine Neutralstellung. Die dahingehenden Betätigungsstellungen für eine hydraulische Arbeitsgerätschaft sind üblicherweise Stand der Technik, sodass an dieser Stelle hierauf nicht mehr näher eingegangen wird. Die Darstellung nach der Fig. 1 betrifft jedenfalls die verrastete Schwimmstellung der Ventilvorrichtung als sogenannte gerastete 4. Stellung.

In Blickrichtung auf die Fig. 1 gesehen, ist auf der rechten Seite eine Betätigungseinrichtung 20 für den horizontal verfahrbaren Steuerschieber 18 angeordnet, beispielsweise ausgebildet in Form eines nicht näher dargestellten Bowdenzuges, der an dem dahingehend freigehaltenen Betätigungsauge des Steuerschiebers an diesem angreift. Auf der gegenüberliegenden Seite des Steuergehäuses 12 ist eine als Ganzes mit 22 bezeichnete Rasteinrichtung vorhanden, deren Aufbau im Folgenden näher erläutert werden wird. Die Rasteinrichtung 22 weist in einem hülsenartigen Führungsteil 24 geführte Rastteile 26 auf, insbesondere in Form von drei zur Verschiebeachse des Steuerschiebers 18 diametral einander gegenüberliegenden Rastkugeln, die in der Art einer Käfigführung radial innerhalb des Führungsteiles 24 verschiebbar gehalten sind. Die Rastkugeln sind also insoweit in einem Kugelkäfig in radialen Bohrungen desselben aufgenommen, wobei die genannten Bohrungen innen einen Kugelsitz aufweisen, der das Durchfallen der jeweils zuordenbaren Rastkugel verhindert.

In konzentrischer Anordnung zu dem Führungsteil 24 ist dieses von einem hülsenförmigen Verriegelungsteil 28 umfaßt, das sich in Längsrichtung parallel zur Verfahrrichtung des Steuerschiebers 18 auf der Außenumfangsseite des Führungsteiles 24 in gegenläufigen Richtungen hin und her bewegen kann.

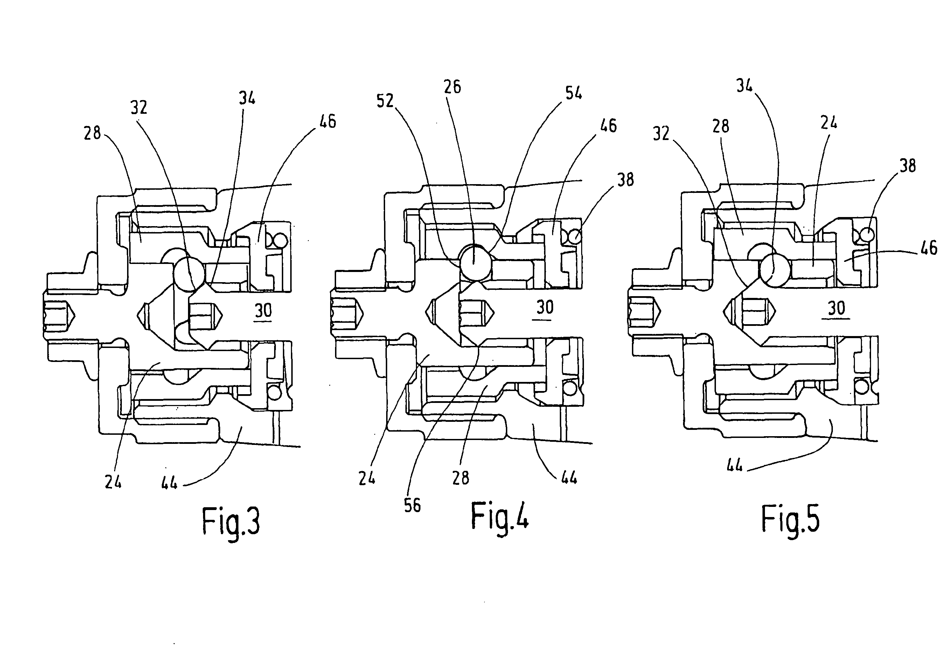

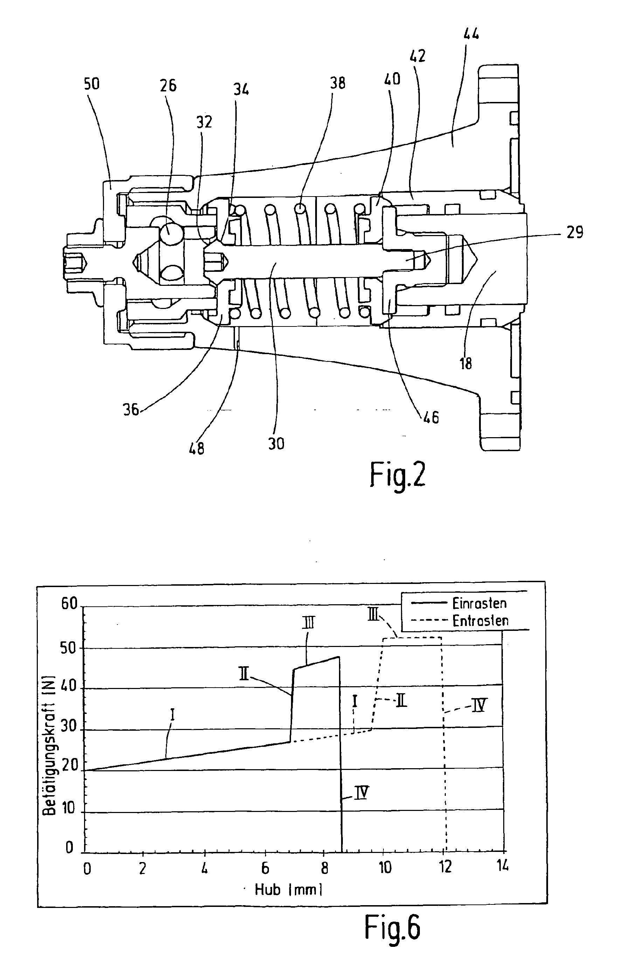

Für einen Verrastungsvorgang, wie er in abgeschlossener Form in Fig. 1 dargestellt ist, ist das Verriegelungsteil 28 unter dem Einfluss des jeweils mittels eines Steuerteils 30 bewegten Rastteils 26, aus einer Ausgangsstellung oder Ruhestellung gemäß der Darstellung nach der Fig. 2 heraus, entgegen der Bewegungsrichtung des genannten Steuerteils 30, in eine Aufnahmestellung gemäß der Darstellung nach der Fig. 4, für die Aufnahme des jeweiligen Rastteils 26 zu verfahren und mit Beginn der Verrastung kehrt das Verriegelungsteil 28 gemäß der Darstellung nach den Fig. 1, 2, 3 und 5 in seine anfängliche linke Ausgangsstellung zurück. Das Steuerteil 30 ist in der Art eines Steuerstabes ausgebildet und in Blickrichtung auf die Fig. 2 gesehen auf seiner rechten Seite, beispielsweise über eine Einschraubstrecke 29 fest mit dem linken Endteil des Steuerschiebers 18 verbunden. Bewegt sich also der Steuerschieber 18, nimmt er das Steuerteil 30 in gleichem Maße mit. Am freien stirnseitigen Ende des Steuerteils 30 ist ein Steuerkonus 32 für das jeweilige Rastteil 26 vorhanden und ferner weist das Steuerteil 30 auf seiner rückwärtigen Seite einen Verriegelungskonus 34 auf. Zur Ausbildung des umlaufenden Steuerkonus 32 sowie des umlaufenden Verriegelungskonus 34 ist das Steuerteil 30 an seinem freien Ende mit einer entsprechenden Umlaufverdickung versehen. Für eine sinnfällige Funktion ist darüber hinaus der Verriegelungskonus 34 stärker geneigt als der Steuerkonus 32.

Gemäß der Darstellung nach der Fig. 2, bei der sich die Rasteinrichtung 22 in der Ausgangs- oder Ruhestellung befindet, liegt der Verriegelungskonus 34 in Anlage mit einer konischen Ausnehmung einer längsverfahrbaren Führungsplatte 36. Die dahingehende Führungsplatte 36 stützt sich auf ihrer einen Seite an einer Druckfeder 38 als Energiespeicher ab und an der gegenüberliegenden anderen Stirnseite der Führungsplatte 36, ist unter Anlage das Verriegelungsteil 28 längsverfahrbar auf dem Führungsteil 24 geführt. Das andere freie Ende der Druckfeder 38 wiederum ist in Anlage mit einer Stützplatte 40, die in der Fig. 2 in Anlage gezeigt ist, mit einer feststehenden Abstützhülse 42 des Gehäuses 44 der Rasteinrichtung 22. Die dahingehende Abstützhülse 42 wird von dem Steuerschieber 18 der Steuereinrichtung 16 durchgriffen und ist insoweit mit seinem freien Ende in der Abstützhülse 42 geführt. Bewegt sich das Steuerteil 30 mit dem Steuerschieber 18 in Blickrichtung auf die Fig. 2 gesehen von rechts nach links und mithin von einer Ruhe- oder Ausgangsstellung nach der Fig. 2 in die Verrastungsstellung nach der Fig. 1 und 5, nimmt ein plattenartiges Führungsteil 46 am freien Ende des Steuerschiebers 18, entgegen der Wirkung der Druckfeder 38 die Stützplatte 40 nach links mit, wobei insoweit der Energiespeicher in Form der Druckfeder 38 weiter vorgespannt wird.

Wie sich weiter aus den Fig. 1 und 2 ergibt, durchgreift das Steuerteil 30 den Energiespeicher in Form der Druckfeder 38 und der dahingehende Druckfederraum ist über eine Entlüftungsbohrung 48, die die Wand des Gehäuses 44 der Rasteinrichtung 22 durchgreift, mit dem Umgebungsdruck verbunden. Des weiteren ist das hülsenförmige Führungsteil 24 mittels einer Überwurfmutter 50 stationär am Gehäuse 44 der Rasteinrichtung 22 gehalten. Wie des weiteren die Fig. 4 zeigt, die eine Übergangsstellung der Rasteinrichtung 22 betrifft, sind jedenfalls die radialen Eindringtiefen der Aufnahmeräume 52 und 54 von Führungsteil 24 bzw. Verriegelungsteil 28 derart gewählt, dass das jeweilige Rastteil 26 unter dem Einfluss des Steuerteils 30 vollständig von den Aufnahmeräumen 52, 54 aufnehmbar ist.

Wie aus der Fig. 1 ferner hervorgeht, hat der Steuerschieber 18 nur eine Arbeitsfeder in Form der Druckfeder 38 für beide Betätigungsrichtungen, wobei Heben rechts sowie Senken und Schwimmstellung links realisiert sein sollen. Der Rastmechanismus ist insoweit in zwei Teilbereiche untergliedert, wobei die erste Kegelkontur als Steuerkonus 32 funktionsmäßig Bestandteil der Vorspannschraube für die Arbeitsfeder 38 ist und somit fest in Verbindung steht mit dem Steuerschieber 18. Der Kugelkäfig mit den kraftübertragenden Rastkugeln als Rastteile 26 ist im hinteren Teil des Gehäuses 44 als Teil des Führungsteiles 24 ortsfest angeordnet. Das als Verschiebehülse ausgebildete Verriegelungsteil 28 mit kegeliger Ausdrehung als zweiter Kegelkontur, die in den Aufnahmeraum 54 mündet, ist in konzentrischer Anordnung axial verschiebbar auf dem Führungsteil 24 gelagert und kann gegen die Kraft der Druckfeder 38 verschoben werden. In der Ruhe- oder Neutralstellung gemäß der Darstellung nach der Fig. 2 sowie in der Senkenstellung gemäß Darstellung nach der Fig. 3, liegt jedenfalls das Verriegelungsteil 28 in der Art einer Schiebehülse axial eingespannt zwischen dem Endanschlag am Gehäuse 44 in Form der Überwurfmutter 50 und dem zugeordneten Federteller in Form der Führungsplatte 36, die von der vorgespannten Arbeitsdruckfeder 38 in Anlage gehalten ist.

Die dahingehende Einspannsituation stellt sich auch für das Verriegelungsteil 28 in der voll verrasteten Position gemäß den Darstellungen nach den Fig. 1 und 5 ein. Nur in dem Übergangsbereich nach der Fig. 4 zwischen der Senkenstellung nach der Fig. 3 und der voll verrasteten Schwimmstellung als 4. Stellung nach den Fig. 1 und 5 ist das Verriegelungsteil 28 nicht eingespannt, sondern in Blickrichtung auf die Fig. 4 gesehen, unter dem Einfluss des Steuerkonus 32 des Steuerteils 30, entgegen der Wirkung der Druckfeder 38 zusammen mit der Führungsplatte 36, nach rechts verschoben.

Wenn die erste Kegelkontur, gebildet durch den Steuerkonus 32, durch die Verfahrbewegung des Steuerschiebers 18 in die Schwimmstellung (ganz linke Verrastungsstellung) die kugelförmigen Rastteile 26 nach außen drückt, dann wird folglich wie dargelegt und in Fig. 4 aufgezeigt, die Schiebehülse in Form des Verriegelungsteiles 28 gegen die Arbeitsdruckfeder 38 nach rechts geschoben, bis die Rastteile 26 in radialer Richtung soweit außen liegen, dass die erste Kegelkontur in Form des Steuerkonus 32 innen durch die nach außen gebildete Begrenzung der Rastteile 26 hindurch fahren kann. Insoweit ist dann durch den spitz zulaufenden Umfassungsrand 56, der die linienförmige Begrenzung nach außen hin von Steuerkonus 32 und Verriegelungskonus 34 darstellt, gemäß der Darstellung nach der Fig. 4 die Rastteile 26 vollständig in die zugeordneten Aufnahmeräumen 52 und 54 von Führungsteil 24 bzw. Verriegelungsteil 28 nach außen hin verdrängt.

Wie bereits dargelegt schließt sich an den Steuerkonus 32 der Verriegelungskonus 34 mit stärkerer Kegelsteigung an, die mithin so ausgelegt ist, dass die Rastkraft jedenfalls größer wird, als die Lösekraft der Druckfeder 38. Die Rastkraft ist insoweit als axiale Komponente der Normalkraft anzusehen, die die kugelförmigen Rastteile 26 auf der Kegelsteigung übertragen. Weil beim Rastvorgang gegen die Druckfeder 38 gedrückt werden muss und beim Entrasten die Druckfeder 38 unterstützt, werden die beiden Kegelwinkel von Steuerkonus 32 und Verriegelungskonus 34 unterschiedlich ausgelegt. Das Ergebnis des Kraft-Wegverlaufes ist insofern beispielhaft in Fig. 6 dargestellt, wobei der mit I bezeichnete Ast die Ruhe- oder Neutralstellung nach der Fig. 2 betrifft, der Ast II sich auf die Senkenstellung nach der Fig. 3 bezieht, der Ast III den Übergangsbereich betrifft gemäß der Darstellung nach der Fig. 4 und der Ast IV den Verriegelungszustand aufzeigt nach den Fig. 1 und 5. Die insoweit in Fig. 6 erfassten Kraftkennlinien betreffen dabei die Betätigungskraft in Newton über dem Ventilhub in Millimetern. Auch zeigt die gepunktete dargestellte Entrastungslinie, dass die Rastposition gesichert ist und der Steuerschieber 18 einen größeren Weg zurückzulegen hat um wirksam eine Entrastung zu veranlassen, sodass insoweit das System der Rasteinrichtung 22 selbstsichernd ist und ungewollte Entrastvorgänge sind dergestalt mit Sicherheit vermieden.

Beim eigentlichen Einrastvorgang trifft der Steuerkonus 32 auf die genannten Rastteile 26, wobei die Kraft ansteigt, weil die kugelförmigen Rastteile 26 die Schiebehülse als Verriegelungsteil 28 verschieben müssen und dabei die Druckfeder 38 weiter vor spannen. Überwinden die Rastteile 26 die -dahingehende Stelle bricht beim Einrastvorgang im Bereich von 8,5 mm Hub die Gegenkraft ein und der Steuerschieber 18 kann leicht in seine Endstellung geschoben werden, wo er dann gerastet gemäß der Darstellung nach den Fig. 1 und 5 bis zu einem Hub von 12 mm stehenbleibt. Beim Entrasten steigt die Kraft schnell auf das Maximum an, weil wieder die Rastkugeln 26 vom Steuerteil 30 des Steuerschiebers 18 zu überwinden sind, was wiederum mit einem Verschiebevorgang des Verriegelungsteiles 28 einhergeht und die Arbeitsfeder 38 wird insoweit wieder vorgespannt.

Sofern das Verriegelungsteil 28 als rotationssymmetrisches hülsenartiges Teil mit innen umlaufenden kegelförmigen Nutbahnen (nicht dargestellt) ausgestattet ist, könnte man die kugelförmigen Rastteile 26 in den genannten Rastnuten verlaufen lassen und insoweit wäre in funktionssicherer Weise die Schiebehülse als Verriegelungsteil 28 drehfest auf dem Führungsteil 24 über die Rastteile 26 geführt.

Insgesamt ist mit der erfindungsgemäßen Ventilvorrichtung eine Integration der Funktionen von einer benötigten Rastfeder in die bereits vorhandene Arbeitsfeder (Druckfeder 38) der Steuereinrichtung 16 erreicht. Aufgrund der angesprochenen Kegelkonturen ist eine Selbsthemmung erreicht, sodass ungewollte Entrastvorgänge mit Sicherheit vermieden sind. Aufgrund der Rotationssymmetrie der eingesetzten Bauteile, insbesondere in Form von Führungsteil 24 und Verriegelungsteil 28 sind etwaige toleranzbedingte Querkräfte ausgeglichen. Im Übrigen wie die Darstellung nach den Fig. 1 bis 5 zeigt, ist mit der erfindungsgemäßen Rasteinrichtung eine einfache Steck- und Schraubmontage möglich.

## Patentansprüche

1. Hydraulische Ventilvorrichtung
- mit einer Fluidanschlussanordnung (10), und
- mit einer verfahrbaren Steuereinrichtung (16) zum zumindest teilweisen Ansteuern von einzelnen Anschlüssen (P, R, LS, P'_{A}, P'_{B}) der Anschlussanordnung (10),
- wobei für ein wahlweises Festhalten der Steuereinrichtung (16) eine Rasteinrichtung (22) vorgesehen ist, die mindestens ein in einem Führungsteil (24) geführtes Rastteil (26) aufweist, das von einem Steuerteil (30) der Steuereinrichtung (16) betätigbar in eine Raststellung eines Verriegelungsteiles (28) bringbar ist,
- wobei für einen Verrastungsvorgang das Verriegelungsteil (28) unter dem Einfluss des jeweils mittels des Steuerteils (30) bewegten Rastteils (26) aus einer Ausgangsstellung heraus, entgegen der Bewegungsrichtung des Steuerteils (30) in eine Aufnahmestellung für die Aufnahme des Rastteils (26) verfährt und mit beginnender Verrastung in seine Ausgangsstellung zurückkehrt,
- wobei das Verriegelungsteil (28) entgegen der Wirkung eines Energiespeichers aus seiner Ausgangsstellung in die Aufnahmestellung verfährt und mit der Wirkung des Energiespeichers in seine Ausgangsstellung zurückkehrt,
- wobei der Energiespeicher, vorzugsweise in Form einer Druckfeder (38) ausgebildet, sich in jeder Verfahrstellung des Steuerschiebers (18) der Steuereinrichtung (16) sich mit seinem einen freien Ende an diesem Steuerschieber (18) und mit seinem anderen freien Ende am Verriegelungsteil (28) permanent abstützt,
- wobei das Steuerteil (30) einen Steuerkonus (32) für das jeweilige Rastteil (26) aufweist, sowie einen Verriegelungskonus (34),
- wobei der Verriegelungskonus (34) stärker geneigt ist als der Steuerkonus (32), und
- wobei das jeweilige Rastteil (26) unter dem Einfluss des axial verfahrbaren Steuerteils (30) in mindestens einen eine radiale Eindringtiefe aufweisenden Aufnahmeraum (52, 54) aufnehmbar ist,
- wobei die radiale Eindringtiefe des mindestens einen Aufnahmeraums (52, 54) derart gewählt ist, dass das jeweilige Rastteil (26) vollständig im jeweiligen Aufnahmeraum (52, 54) aufnehmbar ist und der Steuerkonus (32) den jeweiligen Aufnahmeraum (52, 54) in axialer Richtung passieren kann, **dadurch gekennzeichnet, dass** als linienförmige Begrenzung nach außen hin von Steuerkonus (32) und Verriegelungskonus (34) ein spitz zulaufender Umfassungsrand (56) ausgebildet ist.

2. Ventilvorrichtung nach Anspruch 1, **dadurch gekennzeichnet, dass** der mindestens eine Aufnahmeraum (52, 54) radial außenliegend, insbesondere am Führungs- und/oder Verriegelungsteil (24, 28), ausgebildet ist.

3. Ventilvorrichtung nach Anspruch 2, **dadurch gekennzeichnet, dass** das jeweilige Rastteil (26) aus einer Rastkugel besteht, die in einer Käfigausnehmung als Aufnahmeraum (52) des Führungsteiles (24) aufgenommen ist.

4. Ventilvorrichtung nach Anspruch 2 oder 3, **dadurch gekennzeichnet, dass** das Verriegelungsteil (28) mit einem Aufnahmekonus als Teil eines weiteren Aufnahmeraumes (54) für das jeweilige Rastteil (26) versehen ist.

5. Ventilvorrichtung nach einem der vorhergehenden Ansprüche, **dadurch gekennzeichnet, dass** zur Ausbildung des umlaufenden Steuerkonus (32) sowie des umlaufenden Verriegelungskonus (34) das Steuerteil (30) an seinem freien Ende mit einer Umlaufverdickung versehen ist.

6. Ventilvorrichtung nach einem der vorhergehenden Ansprüche, **dadurch gekennzeichnet, dass** in jeder Verfahrstellung des Steuerteils (30) dieses mit dem Steuerschieber (18) fest verbunden ist und die Druckfeder (38) als Energiespeicher durchgreift.

7. Ventilvorrichtung nach einem der-vorhergehenden Ansprüche, **dadurch gekennzeichnet, dass** sowohl das Führungsteil (24) als auch das Verriegelungsteil (28) aus hülsenförmigen Körpern bestehen und dass das Führungsteil (24) fest mit einem Gehäuseteil (44) verbunden ist, in dem das Steuerteil (30) verfahrbar geführt ist.

8. Ventilvorrichtung nach einem der vorhergehenden Ansprüche, **dadurch gekennzeichnet, dass** der Steuerschieber (18) längsverfahrbar in einem Steuergehäuse (12) geführt ist, auf dessen einer Seite die Rasteinrichtung (22) angelenkt ist und auf dessen anderer Seite die Betätigungseinrichtung (20) für den Steuerschieber (18) angreift.

9. Ventilvorrichtung nach einem der vorhergehenden Ansprüche, **dadurch gekennzeichnet, dass** eine wirksame Verrastung mit der Rasteinrichtung (22) in der Schwimmstellung des Steuerschiebers erfolgt.

## Claims

1. A hydraulic valve device
- having a fluid port arrangement (10) and
- having a moveable control device (16) for at least partially activating individual ports (P, R, LS, P'_{A}, P'_{B}) of the port arrangement (10),
- for selectively securing the control device (16) there being a latching device (22) which has at least one latching part (26) which is guided in a guide part (24), and which can be moved by a control part (30) of the control device (16) in an actuatable manner into a latching position of a locking part (28),
- for a latching process under the influence of the latching part (26) which has been moved respectively by means of the control part (30) out of an initial position, the locking part (28) travelling opposite the direction of movement of the control part (30) into a receiving position for receiving the latching part (26) and, when latching begins, returning into its initial position,
- the locking part (28) travelling against the action of an energy storage device out of its initial position into the holding position and returning into its initial position with the action of the energy storage device,
- the energy storage device, designed preferably in the form of a compression spring (38), being permanently supported in any travel position of the control slide (18) of the control device (16) with its one free end on this control slide (18) and with its other free end on the locking part (28),
- the control part (30) having a control cone (32) for the respective latching part (26), and a locking cone (34),
- the locking cone (34) being more heavily sloped than the control cone (32), and
- the respective latching part (26), under the influence of the axially moveable control part (30) being able to be received in at least one receiving space (52, 54) having a radial penetration depth,
- the radial penetration depth of the at least one receiving space (52, 54) being chosen such that the respective latching part (26) can be completely accommodated by the respective receiving space (52, 54), and the control cone (32) being able to pass the respective receiving space (52, 54) in the axial direction, **characterised in that** a tapered enclosure edge (56) is formed as a linear boundary to the outside from the control cone (32) and the locking cone (34).

2. The valve device according to Claim 1, **characterised in that** the at least one receiving space (52, 54) is formed radially on the outside, in particular on the guide and/or locking part (24, 28).

3. The valve device according to Claim 2, **characterised in that** the respective latching part (26) consists of a latching ball which is accommodated in a cage recess as a receiving space (52) of the guide part (24).

4. The valve device according to Claim 2 or 3, **characterised in that** the locking part (28) is provided with a receiving cone as part of another receiving space (54) for the respective latching part (26).

5. The valve device according to any of the preceding claims, **characterised in that** in order to form the circumferential control cone (32) and the circumferential locking cone (34), the control part is provided on its free end with a circumferential thickening.

6. The valve device according to any of the preceding claims, **characterised in that** in any travel position of the control part (30) the latter is securely connected to the control slide (18) and extends through the compression spring (38) as an energy storage device.

7. The valve device according to any of the preceding claims, **characterised in that** both the guide part (24) and the locking part (28) consist of sleeve-shaped bodies and that the guide part (24) is securely connected to a housing part (44) in which the control part (30) is moveably guided.

8. The valve device according to any of the preceding claims, **characterised in that** the control slide (18) is guided to be able to move lengthwise in a control housing (12) on one side of which the latching device (22) is coupled and on the other side of which the actuating device (20) for the control slide (18) acts.

9. The valve device according to any of the preceding claims, **characterised in that** effective latching with the latching device (22) takes place in the floating position of the control slide.

## Revendications

1. Dispositif à vanne hydraulique,
- comprenant un agencement (10) de raccordement de fluide, et
- comprenant un dispositif (16) de commande déplaçable pour commander au moins en partie des raccords (P,
R, LS, P'_{A}, P'_{B}) individuels de l'agencement (10) de raccordement,
- dans lequel il est prévu, pour une immobilisation au choix du dispositif (16) de commande, un dispositif (22) d'encliquetage, qui a au moins une partie (16) d'encliquetage, qui est guidée dans une partie (24) de guidage et qui, actionnable par une partie (30) de commande du dispositif (16) de commande, peut être mise dans une position d'encliquetage d'une partie (28) de verrouillage,
- dans lequel, pour une opération d'encliquetage, la partie (28) de verrouillage est, sous l'influence de la partie (26) respective d'encliquetage déplacée au moyen de la partie (30) de commande, en étant sortie d'une position initiale , déplacée dans le sens contraire au sens de déplacement de la partie (30) de commande pour venir dans une position de réception de la partie (26) d'encliquetage et est ramenée en sa position initiale lorsque l'encliquetage commence,
- dans lequel la partie (28) de verrouillage se déplace à l'encontre de l'effet d'un accumulateur d'énergie de sa position initiale à la position de réception et par l'effet de l'accumulateur d'énergie revient en sa position initiale,
- dans lequel l'accumulateur d'énergie, de préférence sous la forme d'un ressort (38) de compression, s'appuie, dans chaque position de déplacement du coulisseau (18) de commande du dispositif (16) de commande, par l'une de ses extrémités libres sur ce coulisseau (18) de commande et par son autre extrémité libre sur la partie (28) de verrouillage,
- dans lequel la partie (30) de commande a un cône (32) de commande de la partie (26) d'encliquetage respective ainsi qu'un cône (34) de verrouillage,
- dans lequel le cône (34) de verrouillage est plus incliné que le cône (32) de commande, et
- dans lequel la partie (26) respective d'encliquetage peut, sous l'influence de la partie (30) de commande déplaçable axialement, être mise dans au moins une chambre (52, 54) de réception ayant une profondeur de pénétration radiale,
- dans lequel la profondeur de pénétration radiale de la au moins une chambre (52, 54) de réception est choisie de manière à ce que la partie (26) respective d'encliquetage puisse être reçue complètement dans la chambre (52, 54) respective de réception et de manière à ce que le cône (32) de commande puisse traverser dans la direction axiale la chambre (52, 54) respective de réception,
- **caractérisé en ce qu'**un bord (56) de démarcation conique part, en tant que limitation linéaire, vers l'extérieur à partir du cône (32) de commande et du cône (34) de verrouillage.

2. Dispositif à vanne suivant la revendication 1, **caractérisé en ce que** la au moins une chambre (52, 54) de réception est constituée en s'étendant radialement vers l'extérieur, notamment à la partie de guidage et/ou de verrouillage (24, 28).

3. Dispositif à vanne suivant la revendication 2, **caractérisé en ce que** la partie (26) respective d'encliquetage est constituée d'une bille d'encliquetage, qui est reçue dans un évidement en forme de cage servant de chambre (52) de réception de la partie (24) de guidage.

4. Dispositif à vanne suivant la revendication 2 ou 3, **caractérisé en ce que** la partie (28) de verrouillage est pourvue d'un cône de réception, comme partie d'une autre chambre (54) de réception de la partie (26) respective d'encliquetage.

5. Dispositif à vanne suivant l'une des revendications précédentes, **caractérisé en ce que**, pour la formation du cône (52) de commande faisant le tour, ainsi que du cône (34) de verrouillage faisant le tour, la partie (30) de commande est pourvue à son extrémité libre d'un épaississement faisant le tour.

6. Dispositif à vanne suivant l'une des revendications précédentes, **caractérisé en ce que**, dans chaque position de déplacement de la partie (30) de commande, celle-ci est reliée rigidement au coulisseau (18) de commande et traverse le ressort (38) de compression servant d'accumulateur d'énergie.

7. Dispositif à vanne suivant l'une des revendications précédentes, **caractérisé en ce que** à la fois la partie (24) de commande et la partie (28) de verrouillage sont constituées de pièces en forme de douille et **en ce que** la partie (24) de guidage est reliée rigidement à une partie (44) d'enveloppe, dans laquelle la partie (30) de commande est guidée de manière à pouvoir se déplacer.

8. Dispositif à vanne suivant l'une des revendications précédentes, **caractérisé en ce que** le coulisseau (18) de commande est guidé, avec possibilité de se déplacer longitudinalement, dans une enveloppe (12) de commande sur un côté de laquelle le dispositif (22) d'encliquetage est articulé et dont l'autre côté est attaqué par le dispositif (20) d'actionnement du coulisseau (18) de commande.

9. Dispositif à vanne suivant l'une des revendications précédentes, **caractérisé en ce qu'**un encliquetage efficace s'effectue par le dispositif (22) d'encliquetage dans la position flottante du coulisseau de commande.
